# EUROPEAN PATENT APPLICATION

(11) **EP 4 411 944 A1**
(43) Date of publication of application: **07.08.2024**
(21) Application number: 23154537.7
(22) Date of filing: 01.02.2023
(51) Int. Cl.: H01M 50/105

(54) **POUCH-TYPE BATTERY CASE, SECONDARY BATTERY, AND BATTERY FORMING APPARATUS**

(71) Applicant: LG Energy Solution, Ltd., Seoul 07335 (KR)
(72) Inventor: OH, Jung Hyun, 34122 Daejeon (KR)
(74) Representative: Goddar, Heinz J.

(57) **Abstract**

In a pouch-type battery case (10) which is configured to accommodate an electrode assembly (21) having a structure in which electrodes (23, 25) and separators (24) are alternately arranged, the battery case (10) comprises a pouch film (1) having a film thickness (d₁), a first surface (31) and a second surface (34), a first cup portion (13) formed in the pouch film (1) having a recessed shape offset from the first surface (31) towards the second surface (34); a second cup portion (15) formed in the pouch film (1) having a recessed shape offset from the first surface (31) towards the second surface (34); and a bridge portion (14) formed in the pouch film (1) between the first cup portion (13) and the second cup portion (15) and connecting the first cup portion (13) to the second cup portion (15); the bridge portion (14) includes a notch (41) formed in the first surface (31) projecting towards the second surface (34).

## Description

### TECHNICAL FIELD

The present disclosure relates to our pouch-type battery case, a secondary battery, and a battery forming apparatus.

### BACKGROUND

In modern society, as portable devices such mobile phones, notebook computers, camcorder and digital camera have become popular, the development of battery technology is of great significance. In addition, chargeable/dischargeable secondary batteries have become indispensable power sources for electric vehicles (EV), hybrid electric vehicles (HEV), plug-in hybrid electric vehicles (P-HEV) and the like, in the attempt to solve air pollution, decrease carbon dioxide emissions, and the like, caused by existing combustion engine vehicles using fossil fuel. Therefore, there is a growing need for improvements of secondary batteries.

Currently commercialized secondary batteries include nickel cadmium batteries, nickel hydrogen batteries, nickel zinc batteries, and lithium secondary batteries. Among these, the lithium secondary batteries have come into the spotlight because of various beneficial aspects, for example, they hardly exhibit memory effects compared to nickel-based secondary batteries and thus may be liberally charged and discharged, and they display very low self-discharge rates and high energy density.

A secondary battery may be classified based on the shape of battery case into a cylindrical battery having an electrode assembly mounted in a cylindrical metal can, a prismatic battery having an electrode assembly mounted in a prismatic metal can, and a pouch-type battery. The pouch-type secondary battery generally accommodates an electrode assembly having a structure in which electrodes and separators are alternately arranged within a pouch-shaped case made of a laminated aluminum sheet.

Further, the secondary battery may be classified based on the structure in which a cathode and an anode are stacked with a separator being interposed between the cathode and the anode. Typically, there may be a stacked (laminated) type structure in which pluralities of cathodes and anodes, cut into predetermined unit sizes, are sequentially stacked with separators being interposed between the cathodes and the anodes, or the like. In recent years, in order to solve problems caused by the jelly-roll type electrode assembly and the stacked type electrode assembly, there has been developed a stacked/folded type electrode assembly, which is a combination of the jelly-roll type electrode assembly and the stacked type electrode assembly. Such a stacked type electrode assembly may also be referred to as an electrode stack assembly.

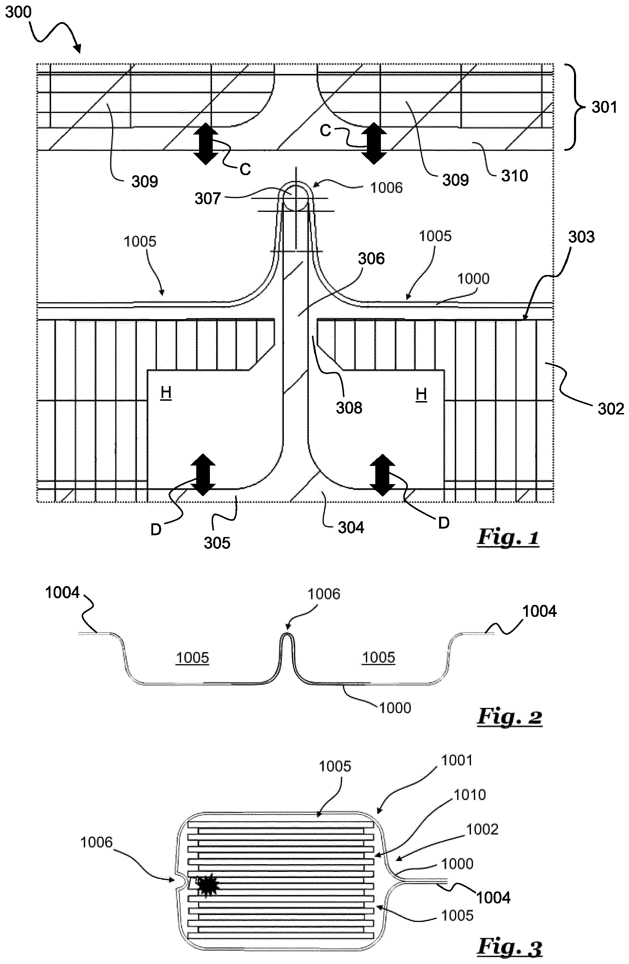

With reference to FIG. 1 to 4, a manufacturing method of a pouch-type secondary battery may comprise a forming process in which a portion of a film (a pouch film) 1000 is formed to provide cups 1005 (or accommodation spaces 1005) that surrounds a recess corresponding to a surface area of an electrode assembly 1010. In particular, the forming process may include press forming the pouch film to form cups in the film.

With reference to FIG. 1, a pouch forming apparatus 300 generally comprises an upper die 301 and a lower die 302. The upper die 301 and the lower die 302 may be operable to move relative to each other (e.g., towards and/or away from each other). Specifically, the lower die 302 may be operable to move towards and away from the upper die 301 and/or the upper die 301 maybe operable to move towards and away the lower die 302. Alternatively or additionally, at least one of the upper die 301 and the lower die 302 may not be moved during the forming of the pouch (i.e., during operation of the apparatus 300).

The apparatus 300 may comprise a die part 304 that is operably coupled to the lower die 302. Initially, the die part 304 may be arranged under the lower die 302, and/or at a bottom part of the lower die 302. For example, the lower die 302 may comprise sidewalls (not shown in FIG. 1) supporting the upper surface 303, and the die part 304 may be at least partially surrounded by the sidewalls of the lower die 302. During operation, the die part 304 may at least partially engage with the sidewalls of the lower die 302. The die part 304 may comprise a base part 305 and a projection part 306 that extends upwardly (i.e., towards the upper die 301) from the base part 305. The projection part 306 of the die part 304 may terminate at a tip portion 307. The projection part 306 may have the shape of a vertical wall with a linear shape in a plan view (e.g., when viewed from the upper die 301). The cross-section of the projection part 306 may be as shown in FIG. 1, while any other proper shape may be contemplated, as discussed in detail below.

The lower die 302 may comprise an upper surface 303, which may also be referred to as a support surface 303. The upper surface 303 may be a flat surface to support an initially flat pouch film. The part of the lower die 302 which includes the upper surface 303 thereof, may also be referred to as an anvil 303. The lower die 302 may comprise a gap 308 provided at the upper surface 303 to allow the peak 307 and a part of the projection part 306 of the die part 304 to protrude therethrough. The gap 308 may have a shape of a linear slit in a plan view. The lower die 302 may be shaped such to provide a hollow space H below the upper surface 303. The die part 304 may be arranged at least partially inside the hollow space H. For example, the movement of die part 304 in an upward direction during operation may be limited by a lower surface (back surface) of the anvil 303. Of course, an upward movement the die part 304 may be stopped before reaching the lower surface of the anvil 303.

The apparatus 300 may further comprise a punch 309 and a stripper part 310. The punch 309 and/or the stripper part 310 may be operably coupled to the upper die 301. The punch 309 may have a shape according to a cup portion 1005 (see also FIG. 2; also referred to herein as a cup or a recessed cup) to be formed in the pouch. In particular, the punch 309 may be configured to provide two or more (three, four or more) cup portions in a pouch. For example, the punch 309 may comprise one or more massive body parts each corresponding to the shape and size of a respective cup portion to be formed in a pouch. A bridge portion 1006 remains between two cup portions 1005. The bridge portion 1006 is formed by the projection part 306 of the die part 304.

For example, the stripper part 310 and/or the punch 309 may be operable to be moved relative to the upper die 301. The punch 309 may be operable to be moved relative to the anvil 303 (i.e., towards and/or away from the anvil 303). The operation (movement) of the punch 309 may be as symbolized by arrows C in FIG. 1. Additionally or alternatively, the die part 304 may be operable to move relative to the upper die 301 (i.e., towards and/or away from the upper die 301). The operation (movement) of the die part 304 may be as symbolized by arrows D in FIG. 1.

During operation of the apparatus 300 and/or in a corresponding method of forming a pouch, a pouch film (an initially flat pouch film) 1000 may be placed on the upper surface 303 of the lower die 302. The die part 304 may be moved upwardly (raised, e.g., towards the upper die 301) such that the tip portion 307 and a part of the projection part 306 projects upwardly through the gap 308 and thus expanding a corresponding portion of the pouch film 1000. In some examples, the die part 304 may be moved such that (until) the tip portion 307 abuts against the striper plate 310. Specifically, the projection part 306 may extend between the punch 309 and may engage the stripper part 310. Typically, the tip portion 307 of the projection part 306 has an essentially semi-circular cross-sectional shape, thus forming a bridge portion 1006 that has a corresponding semi-circular tip.

The punch 309 may be moved downwardly (lowered, e.g., towards the lower die 302) to press against the pouch film 1000. Accordingly, the initially flat pouch film 1000 may be drawn (stretched) according to the shapes of the die tip portion 307, the projection part 306 and the punch 309. Specifically, cup portions may be formed in the pouch according to the shape of the punch 309. A bridge portion may be formed in the pouch between two cup portions according to the shape of the projection part 306 and the tip portion 307 in combination with the punch 309. The movements of the die part 304 and the punch 309 may be performed simultaneously or subsequently. Accordingly, a pouch 1002 having at least two cup portions 1005 and a bridge portion 1006 therebetween may be formed by pressing an initially flat pouch film 1000, see also FIG. 2 to 4.

To release the pouch from the apparatus 300, the punch 309 may be moved upwardly (i.e., away from the lower die 302) and the die part may be moved downwardly (i.e., away from the upper die 301). The stripper part 310 may be moved such as to facilitate removal of the pouch from the apparatus 300, particularly by reducing a contact area between the parts of the apparatus 300 and the pouch. For example, the stripper part 310 may be moved (upwardly and/or downwardly) together with the punch 309. Alternatively, the stripper part 310 may be moved upwardly after a short delay after moving the punch 309 upwardly. Further alternatively, the stripper part 310 may be moved first downwardly and then upwardly.

The pouch film 1000 may be provided as a (initially) flat sheet. The pouch film 1000 may be capable of being plastically press-formed in the manner described herein. The pouch film 1000 may have a laminate structure comprising, for example, a metal film and one or more synthetic material layers. For example, the metal film may be made of aluminum (Al), iron (Fe), copper (Cu), chrome (Cr), manganese (Mn), nickel (Ni), magnesium (Mg), zinc (Zn) or a combination or an alloy thereof. For example, the one synthetic material layer, or each of the synthetic material layers, may be made of or contain polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene, benzobisoxazole, polyarylate, Teflon, glass fiber or a combination thereof.

As discussed in detail below, the projection part 306 is used to form a bridge portion between two cup portions of a pouch. As such, the projection part 306 may be referred to hereinafter as a partition wall 306. Also, the tip portion 307 of the die part 304 may be configured, and specifically formed and shaped, such to design an upper portion of the bridge portion of the pouch film. The tip portion 307 may be referred to hereinafter as a peak 307. Also, the terms cup, recessed cup and cup portion may be used interchangeably unless indicated otherwise or technically inappropriate.

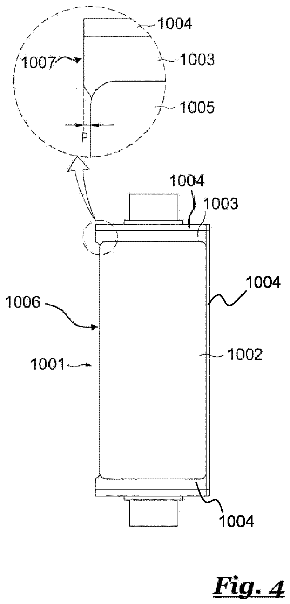

Thereafter, an electrode assembly (also referred to as an electrode stack) 1010 is accommodated in one of the cup portions 1005. The electrode assembly may contain layers of positive electrodes, negative electrode and separators staked upon one another in an alternating and repetitive manner. Subsequently, the film 1000 is folded about the bridge portion 1006 so that the cups 1005 face each other forming the pouch 1002 (FIG. 3). To close the pouch-type secondary battery 1001, regions of a side portion 1003 of the sheet surrounding the perimeter of the opposing cups 1005 are attached to each other along a sealing portion 1004 (FIG. 4).

In an ideal case, the bridge portion 1006 may completely unfold during the folding of the pouch film 1000 such that the resulting pouch 1005 has a substantially flat sidewall where the bridge portion 1006 has been (not shown). However, it may happen that the bridge portion 1006 does not completely unfold due to a rigidity of the material of the pouch film 1000. Accordingly, a part of the bridge portion 1006 may remain after folding the pouch film 1000 which protrudes (extends) inwardly as illustrated in FIG. 3. This remainder of the bridge portion 1006 may contact, and even deform, the electrode assembly accommodated in the pouch 1005. This may cause a damage to the electrode assembly and a short-circuit, possibly leading to a defect, a failure and/or a safety issue of a battery.

Moreover, due to a height difference P between on the one hand an area surrounding the cups 1005 comprising the at least part of the side portion 1003, which have not been subjected to the forming and pressing process, including the sealing portion 1004, and on the other hand the cups 1005, which have been subjected to the forming process, so called bat-ears 1007 may occur when folding the pouch. Such a bat-ear 1007 is a portion unnecessarily protruding and warping the exterior of a battery case, causing an increase in dead space not contributing to a capacity of the secondary battery. As a result, the energy density of the secondary battery is degraded. Also, the bat-ear 1007 causes inaccurate measurement of the full width of a cell, poses a crack risk, and complicates assembly of battery modules.

### DETAILED DESCRIPTION OF THE INVENTION

### TECHNICAL PROBLEM

It is an object of the present disclosure to overcome the problems of the prior art, in particular to provide a pouch-type battery case, a secondary battery, and a battery forming apparatus which prevent undesired and potentially harmful deformation of a pouch film.

However, the problem to be solved by the embodiments of the present disclosure is not limited to the above-described problems, and can be variously expanded within the scope of the technical idea included in the present disclosure.

### TECHNICAL SOLUTION

One or more problems known from the prior art are solved by the subject-matter according to the independent claims. Particular embodiments are given by the features of the dependent claims.

It is noted that some of the features and operations of a system and method for press forming a pouch as described above with reference to FIG. 1, 2 and 4 may also be employed in the claimed subject-matter, and may not be repeated hereinafter for the sake of conciseness of the description.

The present disclosure relates to a pouch-type battery case configured to accommodate an electrode assembly having a structure in which electrodes and separators are alternatively arranged. Such an electrode assembly may be referred to as an electrode assembly. The pouch-type battery case according to the disclosure comprises the pouch film, a first cup portion, a second cup portion and a bridge portion.

The pouch film has a film thickness. The film thickness is preferably constant and/or continuous in the crosswise film direction. The film thickness is preferably constant and/or continuous in the longitudinal film direction. The pouch film has a first surface, which in particular is configured to act as an inner surface of pouch-type battery case, and a second surface, which in particular is configured to act as an outer surface of the pouch-type battery case. The first surface may be in engagement with the electrode assembly placed in order to be placed within the pouch-type battery case. The second surface may face away from the electrode assembly and optionally be in engagement with the environment surrounding the secondary battery.

The pouch film may define a longitudinal film direction and a crosswise film direction. The pouch film may, prior to being shaped into a pouch-type battery case, be weblike, defining a generally planar extension with a longitudinal film direction, which may correspond to a pouch film transport direction in a forming apparatus, and a crosswise film direction arranged perpendicular to the longitudinal film direction. The extension of the pouch film in the webdirection or longitudinal film direction may be substantially larger than the extension in the crosswise film direction. For instance, the extension in the crosswise film direction may be between 10 mm and 500 mm, for instance between 50 mm and 100 mm, and the extension of the pouch film in the longitudinal direction may be larger. In the longitudinal direction, the pouch film may be designed so as to be separated into individual sections to form a web-like or "endless" extension, prior to being fixed as a pouch-type secondary battery. The film thickness extends perpendicular to both the longitudinal film direction and the crosswise film direction. The film thickness may be at least 100 times, in particular at least 1000 times, smaller than the smaller one of the extension of the pouch film in the crosswise film direction or longitudinal film direction.

The first cup portion Is formed in the pouch film having a recessed shape offset from the first surface towards the second surface. The second cup portion is formed in the pouch film having a recessed shape offset from the first surface towards the second surface. In simple terms, when the pouch film is formed to a pouch using a deep drawing apparatus or the like, such as described below, the pouch film may be arranged between a punch and a die such that a downward motion of the punch in relation to the die forms cup portions protruding downwards. It shall be clear that the term "downwards" as used herein shall be understood to generally refer to a first direction. The first direction is direction in which the relative movement of the punch in relation to the die for deep drawing the pouch film to form the cup portions is performed, wherein either the die may be stationary and the punch move downwards, or the punch may be stationary and the die move upwards (in a second direction opposite the first direction), or both the die may be moved in the second direction towards the punch and the punch may be moved in the first direction towards the die.

The bridge portion is formed in the pouch film between the first cup portion and the second cup portion. The bridge portion connects the first cup portion to the second cup portion. Preferably, the bridge portion is arranged in the lateral film direction between the first and second cup portion. The bridge portion preferably extends in the crosswise film direction. The first and second cup portions are optionally of approximately the same size and shape. The first cup portion has a first cup depth and the second cup portion has a second cup depth. The first and/or second cup depth is preferably larger than the film thickness. It may be preferred that the first and/or second cup depth is at least 10 times, in particular at least 100 times as large as the film thickness. The extension of the pouch film in the crosswise film direction may be at least five times, in particular at least 10 times, preferably at least 20 times as large as the first and/or second cup depth. The first and/or a second cup depth is preferably adapted to the height of the electrode assembly. In particular, the first cup portion is configured to receive a first part of an electrode assembly accommodated or to be accommodated within the battery case. The first part of the electrode assembly may be at least one quarter, at least one third, or at least one half of an electrode stack forming the electrode assembly. Alternatively or additionally, the second cup portion is configured to receive a second part of an electrode assembly accommodated or to be accommodated within the battery case. The second part of the electrode assembly may be at least one quarter, at least one third, or at least one half of the electrode stack forming the electrode assembly. The first and second cup portion may preferably be arranged in a symmetrical manner with respect to one another with the bridge portion in between. It may be preferred that the length of the bridge portion (bridge portion length) in the crosswise film direction corresponds to the length of the first and/or a second cup in the crosswise the film direction. It may be preferred that the bridge portion terminates in the crosswise direction on the one side into a first side portion and on the opposite side into a second side portion of the pouch film.

According to a first aspect of the pouch-type battery case according to the present disclosure, the bridge portion includes a notch formed in the first surface projecting towards the second surface. The bridge portion and/or the notch may be curved. The curvature of the notch is preferably opposite to the curvature of the bridge portion. It may be preferred that the pouch film is continuously curved from the first cup portion to the second cup portion, wherein the curvature of the notch is bent in the opposite direction of the curvature of the remaining bridge portion. The notch may be configured to extend continuously in the crosswise film direction. The notch may have a notch length corresponding to the length of the bridge portion. The notch length may, in particular continuously, extend from a first side portion of the battery case adjacent to the first and/or second cup portion to a second side portion of the battery case adjacent to the first and/or second cup portion, wherein the first side portion and the second side portion are arranged opposite to one another in the crosswise film direction.

Advantageously, the notch may act in a hinge-like manner when the first and second cup portions are folded onto one another so as to create a pouch for accommodating the battery assembly. By providing the bridge portion with the notch, a more well-defined pouch-type secondary battery can be shaped in comparison to prior art designs. The provision of the notch prevents the peak of the bridge portion to collide with the electrode assembly, thereby reducing the risk of deforming and/or damaging the anodes, cathodes and separators. Furthermore, it was found that the provision of a notch in the bridge portion leads to a significant reduction of bat-ear formation. Accordingly, it is possible to enhance the energy density, improve dimensional stability of a cell, prevent crack risk, and to facilitate the assembly of a battery module.

In an embodiment of a pouch-type battery case, the notch has a notch depth smaller than the film thickness, in particular less than half of the film thickness. The notch depth may be at least one tenth of the film thickness, preferably at least one quarter of the film thickness. The notch depth may be at least 10µm, in particular at least 25 µm, preferably at least 50 µm, more preferably at least 100 µm. Alternatively or additionally, the notch depth may be no larger than 200 µm, in particular no more than 180 µm, preferably no more than 150 µm. It is preferred that the notch depth is constant for at least 50% of the length of the notch in the crosswise film direction, in particular for at least 75% of the length, preferably for at least 90% of the length or at least 95% of the length of the notch. By providing notch with such a depth, the pouch-type battery case may be provided with the improved folding characteristics while maintaining the structural integrity of the pouch film in the area of the bridge portion. A notch depth which significantly extends beyond the film thickness on the other hand was shown to express cracks or other weakening of the pouch film which could lead to decreased durability of the battery case.

In another embodiment of the pouch-type battery case which may be combined with the aforementioned one, the notch has a notch width extending in the longitudinal film direction between two summits of the pouch film adjacent the notch. The summits may be on a peak level of the inner surface of the bridge portion. Alternatively or additionally, the summits may be on a level of the inner surface surrounding the cup portions, in particular on the level of a plane defined by the side portion.

The notch width is at least one half, in particular at least one times, of the film thickness. Alternatively or additionally, the notch width is no more than three times, in particular no more than two times, as large as the film thickness. The notch depth may be at least 50µm, in particular at least 100 µm, preferably at least 250 µm. Alternatively or additionally, the notch depth may be no larger than 2 mm, in particular no more than 1,5 mm, preferably no more than 1 mm. It is preferred that the notch width is constant for at least 30% or at least 50% of the length of the notch in the crosswise film direction, in particular for at least 75% of the length, preferably for at least 90% of the length or at least 95% of the length of the notch.

In a further embodiment of pouch-type battery case, that may be combined with the aforementioned ones, the bridge portion defines a bridge portion width extending from the first cup portion to the second cup portion. The bridge portion width corresponds to the distance from the first cup portion to the second cup portion. The bridge portion width is preferably constant in the crosswise direction. The bridge portion width is preferably defined by the distance from the inner surface of a first peripheral portion of the first cup portion to the inner surface of a first peripheral portion of the second cup portion. After shaping (or: drawing) and before folding, the first peripheral portions of the first and second cup portions form opposite legs of the bridge portion having outside surfaces facing one another. In particular, the bridge portion width is at least four times, preferably at least six times, as large as the film thickness. Alternatively or additionally, the bridge portion width may be no more than 20 times, in particular no more than 10 times as large as the film thickness. In particular, the radius of curvature of the notch is at least as large as, preferably larger than, the radius of curvature of the summits of the bridge portion adjacent to the notch. The bridge width may be at least 0,5 mm, in particular at least 0,75 mm, preferably at least 1 mm, and/or no more than 5 mm, in particular no more than 2 mm, preferably no more than 1,5 mm. By adapting the bridge width and the notch width to one another as described above, the folding deformation can be controlled such that undesired wrinkling, bat ear formation or formation of protrusions posing a risk to collide with the electrode assembly accommodated therein can be minimized.

According to an embodiment of the pouch-type battery case, that may be combined with the aforementioned ones, the bridge portion (including the notch) has an M-shaped cross-section in the longitudinal film direction. The M-shaped cross-section of the bridge portion is preferably constant and/or continuous along the length of the bridge portion in the crosswise film direction. The M-shape of the bridge-portion may persist for at least 50% of the length of the notch in the crosswise film direction, in particular for at least 75% of the length, preferably for at least 90% of the length or at least 95% of the length of the bridge portion.

According to an embodiment of the pouch-type battery case according to the first aspect of the present disclosure and possibly one or more of its above-mentioned embodiments, and/or according to the second aspect of the present disclosure mentioned below and possibly one or more of the embodiments thereof, the pouch film has a pouch film thickness of 100 µm to 250 µm, in particular 160 µm to 200 µm, preferably 175 µm to 190 µm. Preferably, the pouch film includes a gas barrier layer which is made of metal. The metal of the gas barrier layer of the pouch film preferably comprises or consists of aluminum and/or an alloy containing aluminum, particularly including an alloy no. AA80XX series aluminum alloy. The alloy no. of the aluminum alloy may be AA8021. The aluminum alloy may include about 1.3 wt% to about 1.7 wt% of iron and about 0.2 wt% or less of silicon, and may have a grain size of about 10 µm to about 13 µm. The thickness of the gas barrier layer may be 30 µm to 150 µm, in particular 70 µm to 120 µm, preferably 80 µm to 100 µm. The pouch film may further include a sealant layer made of a first polymer, preferably formed as an innermost layer. The thickness of the sealant layer may be 60 µm to 100 µm. Additionally or alternatively, the pouch film may include a surface protection layer made of a second polymer, preferably formed as an outermost layer. The first polymer may be the same as the second polymer or different from the second polymer. In particular, the gas barrier layer is stacked between the surface protection layer and the sealant layer. The pouch film may further include a drawing assistance layer which is made of a third polymer. The third polymer may be the same as or different from the first and/or second polymer. The drawing assistance layer may be stacked between the surface protection layer and the gas barrier layer. A thickness of the drawing assistance layer may be 10 µm to 75 µm, particularly 20 µm to 50 µm.

The first polymer may be made of one or more materials selected from the group consisting of polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene benzobisoxazole, polyarylate, Teflon, and glass fiber. In particular, polyolefin-based resin such as polypropylene (PP) or polyethylene (PE) may be a main component in the first polymer. Polypropylene (PP) may provide excellent mechanical properties including tensile strength, rigidity, surface hardness, wear resistance, and thermal resistance, and excellent chemical properties including corrosion resistance and therefore be selected as a main component of the sealant layer.

The second polymer may be made of one or more from polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene benzobisoxazole, polyarylate, Teflon, and glass fiber. It may be advantageous to mainly use a polymer having a desirable wear resistance and thermal resistance, such as polyethylene terephthalate (PET).

The third polymer may be made of one or more from polyethylene, polypropylene, polycarbonate, polyethylene terephthalate, polyvinyl chloride, acryl-based polymer, polyacrylonitrile, polyimide, polyamide, cellulose, aramid, nylon, polyester, polyparaphenylene benzobisoxazole, polyarylate, Teflon, and glass fiber. Particularly, a nylon resin may be easily bonded to the polyethylene terephthalate (PET) of the surface protection layer and may exhibit a similar behavior to the aluminum alloy of the moisture barrier layer during and after a drawing process. Thus, a nylon resin may be used as a main component of the third polymer.

In a second aspect of the present disclosure, the present disclosure relates to a pouch-type battery case configured to accommodate an electrode assembly having a structure in which electrodes and separators are alternatively arranged. Such an electrode assembly may be referred to as an electrode assembly. The pouch-type battery case according to the disclosure comprises the pouch film, a first cup portion, a second cup portion and a bridge portion.

According to the second aspect of the present disclosure, which may be combined with the first aspect of the present disclosure and optionally the at least one or more of the embodiments thereof, the bridge portion, which separates the first cup portion from the second cup portion in the longitudinal film direction, and which extends in a crosswise film direction, includes a central bridge section arranged between two lateral bridge sections in the crosswise film direction, wherein the central bridge section is offset from the lateral bridge sections towards the second surface. It may be preferred that the length of the bridge portion (bridge portion length) in the crosswise film direction corresponds to the length of the first and/or a second cup in the crosswise the film direction. It may be preferred that the bridge portion terminates in the crosswise direction on the one side into a first side portion and on the opposite side into a second side portion of the pouch film. The cup portions adjacent to the bridge portion have a respective cup depth. The cup depth of the first cup portion is preferably be equal to the cup depth of the second cup portion. Each cup portion's cup depth, preferably a constant cup depth, is defined by the depth of engagement of the punch into the die. The offset from the lateral bridge sections to the central bridge section maybe at least 50 µm, in particular at least 100 µm, preferably at least 150 µm, and/or no more than 500 µm, in particular no more than 300 µm, preferably no more than 250 µm. The offset from the lateral bridge sections to the central bridge section may be at least 0,5 times, in particular at least 0,75 times, preferably at least one times, and/or no more than 2 times, in particular no more than 1,5 times, preferably no more than 1,25 times the pouch film thickness. By providing an offset between the lateral sections in the central section of the bridge portion, the undesired formation of bat ears could be greatly decreased. Also, the provision of a downwardly offset central bridge section was shown to lead to substantial decrease in collisions between folded bridge portions and electrode assemblies arranged within the battery pouch.

In an embodiment of the second aspect of the pouch-type battery case, the lateral bridge sections are on the same level as the inner surface surrounding the cup portion, in particular on the level of a plane defined by the inner surface surrounding the first and/or a second cup portions, in particular the side portions arranged adjacent to the cup portions in the crosswise direction.

In a further embodiment of the second aspect of the pouch type battery case, the central section has a first length and the lateral sections each have a second length. The first lateral section and the second lateral section may have the same second length. In particular, the level of the lateral section is constant along the second length. Alternatively or additionally, along the first length, the level of the central bridge section is constant. The first length is preferably larger than the second length. In particular, the first length may be at least 10 mm, in particular at least 20 mm, preferably at least 50 mm, and/or no more than 200 mm, in particular no more than 150 mm, preferably no more than 100 mm. In particular, the first length is at least twice as large as the second length. In particular, the second length may be at least 2 mm, in particular at least 5 mm, preferably at least 7 mm, and/or no more than 20 mm, in particular no more than 15 mm, preferably no more than 12 mm.

According to another embodiment of the second aspect of the pouch-type-battery case, which may be combined with the aforementioned ones, the bridge portion further comprises inclined sections connecting the central section and the lateral sections. A first inclined section may be arranged between the first lateral bridge section and the central bridge section, and a second inclined section may be arranged between the central bridge section and the second lateral bridge section. The inclined sections gradually change the level of the bridge portion from the central bridge section to the elevated level of the lateral bridge sections. The inclined sections may have a, in particular continuous, constant, linear inclination, and/or, at least sectionally or continuously, be formed as an arcuate slope. The length of the inclined sections is preferably equal. The length of the inclined sections is preferably smaller than the length of the central bridge section. The length of the inclined sections (third length) may be as large as or smaller than the length of the lateral bridge sections. In particular, the third length may be at least 1 mm, in particular at least 3 mm, preferably at least 5 mm, and/or no more than 12 mm, in particular no more than 10 mm, preferably no more than 8 mm. By providing such an inclination between the lateral bridge sections which are offset and thus elevated above the central bridge section, undesired wrinkling or other deformation which may be hard control during folding of the pouch film, may be minimized or even completely avoided. Surprisingly significant improvements regarding deformation control of the folding were perceived when both the first and second aspect of the present disclosure were realized in a pouch-type battery case.

According to a third aspect of the present disclosure, a secondary battery is provided, including a battery case according to at least one of the first and/or second aspect of the disclosure and optionally embodiments thereof. In the secondary battery, the first cup portion and the second cup portion lie directly opposite one another forming a pouch. Furthermore, an electrode assembly is accommodated in the pouch. Preferably, the secondary battery is formed by folding the pouch film about the notch in the bridge portion. In the secondary battery, side portions adjacent to on the one hand the first cup portion and on the other hand the second cup portion engage one another and are preferably sealingly attached to one another. Furthermore, sealing portions of the pouch film adjacent to the first or second cup portion, respectively, and arranged opposite to the bridge portion with respect to the cup portion engage one another and are preferably sealingly attached to one another. First peripheral portions of the first and second cup portions (which face in each other prior to the folding of the pouch film about the bridge portion) may form a substantially flat bottom surface of the pouch-type secondary battery.

A pouch, which is a case of the pouch-type secondary battery, may be manufactured by forming two cup portions through press processing on a flexible pouch film. Then, after the cup portion has been formed, the electrode assembly is accommodated in an accommodation space of one of the cup portions, and sides thereof are sealed. Through this, the secondary battery is manufactured.

The draw-forming, as one example of a press forming processing, which may performed in a manner in which: a pouch film is inserted into a forming apparatus such as a press machine such as the one described hereinbelow; and the pouch film is pressed and drawn by a punch and/or die. The pouch film is made of a plurality of layers, and a moisture barrier layer positioned as an inner layer is formed of metal.

The present disclosure furthermore relates to a battery case forming apparatus for manufacturing a pouch-type battery case, in particular as described above, preferably according to the first aspect of the disclosure. The battery case forming apparatus comprises a die, a punch, and a stripper part.

The die has a top surface, on which a pouch film is to be placed, and which comprises two forming spaces recessed from the top surface, and a partition wall separating the forming spaces. The forming spaces are preferably adapted for forming the first and second cup portion.

The punch is disposed above the forming spaces. The punch includes two punch pads. In particular a first punch pad corresponds to a first forming space for forming a first cup portion and a second punch pad corresponds to a second forming space for forming second cup portion. The punch is operable to descend the punch pads so as to insert the pouch film placed on the top surface, into the forming spaces.

The die may preferably be configured such that portions of the pouch film placed in the area of projection of the forming spaces will be offset by the punch so as to form cup sections. Additionally, the die may be configured such that portions of the pouch film placed on top of a solid section of the die top surface, adjacent to the area of projection of the forming spaces and partition wall, will form side portions and/or sealing portions, and/or which may preferably remain at a first level.

The stripper part cooperates with the punch and is arranged between the punch pads. Preferably, the stripper part is arranged opposite to the partition wall. The stripper part is preferably configured to cooperate with the partition wall to form a bridge portion for a pouch-type battery case into the pouch film.

According to a third aspect of the present disclosure, the stripper part comprises a protrusion configured to shape a notch into the pouch film and the partition wall comprises a crease opposite the protrusion for receiving a portion of the pouch film, in particular a portion of the pouch film displaced by the protrusion. The crease and the protrusion are preferably complementarily shaped. The die and punch are preferably adapted to accommodate pouch film in between when the punch is descended into the die. Additionally or alternatively, the protrusion and the crease are adapted to accommodate pouch film in between when the punch is descended into the die. When the punch is descended into the die, the die and the punch may be adapted to one another to maintain a distance corresponding to the pouch film thickness of the pouch film to be formed. Alternatively or additionally, When the punch is descended into the die, the stripper portion including the protrusion and the die including the crease may be adapted to one another to maintain a distance corresponding to the pouch film thickness of the pouch film to be formed.

In a further development of the battery case forming apparatus according to the third aspect of the disclosure, the protrusion has a protrusion height, wherein the protrusion height is smaller than a film thickness of the pouch film to be shaped. In particular, the protrusion height is smaller than half of the film thickness or at least one tenth of the film thickness. Alternatively or additionally, the crease has a crease depth, wherein the crease depth is smaller than a film thickness of the pouch film to be shaped. In particular, the crease depth is smaller than half of the film thickness or at least one tenth of the film thickness. The crease depth corresponds to, and is preferably is equal to, the protrusion height.

According to an embodiment of the battery case forming apparatus which may be combined with the previous one, the crease defines a crease width extending between adjacent shoulders of the partition wall. The partition wall has a wall thickness defined between the two forming spaces. The wall thickness is at least 1,1 times as large as the crease width, in particular at least 1,25 times as large as the crease width. Alternatively or additionally, the wall thickness is no larger than 2 times the crease width, in particular no larger than 1,5 times the crease width. In particular, the wall thickness is larger than the film thickness of the pouch film to be shaped. Preferably, the wall thickness is at least 2 times, preferably at least 4 times as large as the film thickness. Alternatively or additionally, the wall film thickness is no larger than 10 times the thickness, in particular no larger than 6 times the film thickness of the pouch film to be drawn in the apparatus. The wall thickness may be at least 0,3 mm, in particular at least 0,5 mm, preferably at least 0,75 mm, and/or no more than 4 mm, in particular no more than 1,5 mm, preferably no more than 1,25 mm.

In another embodiment of the battery case forming apparatus which may be combined with the previous ones, the protrusion has a protrusion width between adjacent planar flanks of the stripper part. The protrusion width is larger than the protrusion height. In particular, the protrusion width is at least 1,25 times, preferably at least 1,5 times, as large as the protrusion height. Alternatively or additionally, the protrusion width is no more than 3 times, preferably no more than 2 times, as large as the protrusion height. Preferably, the protrusion has a cosine-shaped cross section.

The present disclosure also relates to a battery case forming apparatus for manufacturing a pouch-type battery case, in particular as described above, preferably according to the second aspect of the disclosure. The battery case forming apparatus comprises a die, a punch, and a stripper part.

The die has a top surface, on which a pouch film is to be placed, and which comprises two forming spaces recessed from the top surface and a partition wall separating the forming spaces. The forming spaces are preferably adapted for forming the first and second cup portion.

The punch is disposed above the forming spaces. The punch includes two punch pads. In particular a first punch pad corresponds to a first forming space for forming a first cup portion and a second punch pad corresponds to a second forming space for forming second cup portion. The punch is operable to descend the punch pads so as to insert the pouch film placed on the top surface, into the forming spaces.

The die may preferably be configured such that portions of the pouch film placed in the area of projection of the forming spaces will be offset by the punch so as to form cup sections. Additionally, the die may be configured such that portions of the pouch film placed on top of a solid section of the die top surface, adjacent to the area of projection of the forming spaces and partition wall, will form side portions and/or sealing portions, and/or which may preferably remain at a first level.

The stripper part cooperates with the punch and is arranged between the punch pads. Preferably, the stripper part is arranged opposite to the partition wall. The stripper part is preferably configured to cooperate with the partition wall to form a bridge portion for a pouch-type battery case into the pouch film.

According to a fourth aspect of the present disclosure, that may be combined with the third aspect and the embodiments thereof, the partition wall is arranged between the forming spaces in a crosswise direction. The partition wall comprises a central wall section arranged between two lateral wall sections in a crosswise direction. The central wall section is offset with respect to the lateral wall sections in the direction in which the punch pads descend. The offset from the lateral wall sections to the central wall section maybe at least 50 µm, in particular at least 100 µm, preferably at least 150 µm, and/or no more than 500 µm, in particular no more than 300 µm, preferably no more than 250 µm. The offset from the lateral wall sections to the central wall section may be at least 0,5 times, in particular at least 0,75 times, preferably at least one times, and/or no more than 2 times, in particular no more than 1,5 times, preferably no more than 1,25 times the pouch film thickness of the pouch film to be drawn in the apparatus.

According to an embodiment of the fourth aspect, the stripper part and/or the punch has a lug portion. The lug portion is preferably shaped complementarily to the partition wall. The lug portion is arranged between the punch pads. The lug portion includes a central lug section arranged between to lateral lug sections in a crosswise direction, wherein the central lug section protrudes so as to be introduced into a retraction of the die provided by the central wall section.

### ADVANTAGEOUS EFFECTS

According to the embodiments, a more well-defined pouch-type secondary battery can be shaped in comparison to prior art designs, and collisions of the bridge portion with the electrode assembly may be avoided, thereby reducing the risk of deforming and/or damaging the anodes, cathodes and separators. Furthermore, a significant reduction of bat-ear formation could be achieved according to the embodiments. Accordingly, it is possible to enhance the energy density, improve dimensional stability of a cell, prevent crack risk, and to facilitate the assembly of a battery module.

The effects of the present disclosure are not limited to the effects mentioned above and additional other effects not described above will be clearly understood from the description of the appended claims by those skilled in the art.

### [BRIEF DESCRIPTION OF THE DRAWINGS]

FIG. 1 is a schematic sectional view of an apparatus for forming a secondary battery.
FIG. 2 is a schematic side view of a battery case for a pouch-type secondary battery.
FIG. 3 is a schematic sectional view of a pouch-type secondary battery.
FIG. 4 is another view of a pouch-type secondary battery.
FIG. 5 is a schematic exploded view of a battery case and electrode assembly for a pouch-type secondary battery according to an example.
FIG. 6 is a schematic sectional view of a battery case according to an example with an electrode assembly accommodated therein.
FIG. 7 is a schematic side view of a battery case for a pouch-type secondary battery according to an example,
FIG. 8 is a schematic sectional view of a pouch-type secondary battery according to an example.
FIG. 9 is a schematic detailed view of a bridge portion of a pouch-type secondary battery between a partition wall and a stripper part of an apparatus according to an example.
FIG. 10 is another schematic sectional view of a pouch-type secondary battery according to an example.
FIG. 11 is a schematic sectional view of an apparatus for forming a secondary battery according to an example.
FIG. 12 is another schematic detailed view of a bridge portion of a pouch-type secondary battery between a partition wall and a stripper part of an apparatus according to an example.
FIG. 13 is a detailed view of the engagement between the partition wall and the pouch film in the apparatus according to an example.
FIG. 14 is a detailed view of the engagement between the stripper part and the pouch film in the apparatus according to an example.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure can be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity. Meanwhile, similarly to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Hereinafter, a battery case, a pouch-type secondary battery and an apparatus are described with reference to the accompanying drawings. While the examples shown in, and described with reference to, FIG. 1 to 4 are meant to exemplify a general device and a general manufacturing method, it is noted that some of the features and operations of a system and a method for press forming a pouch as described above with reference to FIG. 1 to 4 may also be implemented in the embodiments unless it is technically inappropriate. Such features and operations may not be explicitly repeated hereinafter for the sake of conciseness of the description.

A pouch type battery according to the present disclosure is generally designated with the reference numeral 10. A battery case for such a pouch-type battery assembly is generally designated with the reference numeral 11. An apparatus for forming a pouch-type battery according to the present disclosure is generally designated with reference numeral 100. FIG.

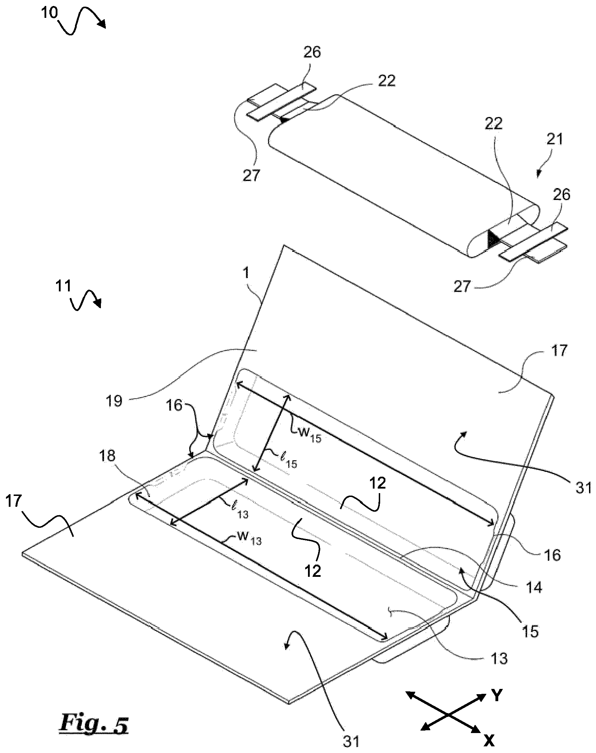

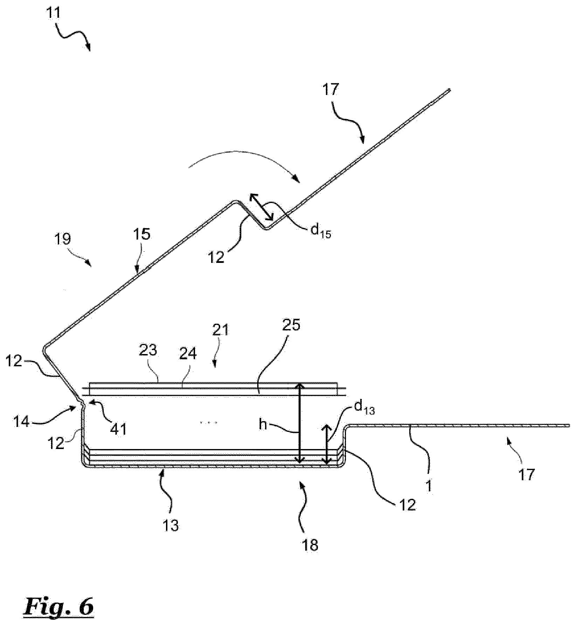

FIG. 5 shows an exploded view of a battery 10. The battery 10 may be a secondary battery, in particular a pouch-type secondary battery. The battery 10 comprises a battery case 11. Further shown in FIG. 5 is an exemplary electrode assembly 21 to be accommodated in the battery case 11. FIG. 6 shows a schematic cross-sectional view of the battery case 11 containing an electrode assembly 21.

The battery case 11 may be formed by press forming a pouch film 1, for example in a similar manner to the above description with reference to FIG. 1 to 4. In FIG. 5 and 6, the battery case 11 comprises a first case section 18, a second case section 19 and a bridge portion 14 formed therebetween. The first case section may comprise a first cup portion 13 that is recessed in a thickness direction from the pouch film 1. The first cup portion 13 may have a tray shape with a rectangular shape in a plan view (i.e., in the thickness direction) with rounded corners. The second case section 19 may comprise a second cup portion 15 that is recessed in a thickness direction from the pouch film 1. The second cup portion 15 may have a tray shape with a rectangular shape in a plan view (i.e., in the thickness direction) with rounded corners. The first case section 18 and the second case section 19 may be foldable or folded about the bridge portion 14. In particular one of the first and second case sections 18, 19 may be folded onto the respectively other case section 18, 19 such that the first and second cup portions 13, 15 come to rest on each other. A pouch for accommodating the electrode assembly 21 therein may be obtained in this manner.

The electrode assembly 21 comprises electrodes 23, 25 each having a sheet-like shape. The electrode assembly 21 may be prepared by stacking the electrodes 23, 25 on top of one another in an alternating manner with separators 24 interposed between neighboring electrodes 23, 25.

As can be seen in FIG. 5, the sheet-like electrodes 23, 25 have electrode tabs 22 protruding from the electrodes 23, 25 on opposite sides of the electrode assembly 21 in the crosswise direction X. For example, a first electrode tab 22 projects from a first side of the electrode assembly 21 and may be operatively coupled to negative electrodes 23, and a second electrode tab 22 protrudes on a second side of the electrode assembly 21 and is operatively coupled to the positive electrodes 25. The first side and the second side of the electrode assembly 21 may be opposite to each other or may refer to a same side of the electrode assembly 21 (not shown in the drawings). The electrode tabs 22 are each provided with an insulation part 26 configured to be arranged between the opposite side portions 16 of the battery case 11. The side portions 16 of the battery case 11 are attached to each other through folding of the pouch film 1 (i.e., in an assembled state of the battery 10) so as to provide a fluid-tight sealing. Each electrode tab 22 terminates in a respective electrode lead 27 for electrical connection.

The pouch film 1 may be configured as described above with reference to FIG. 1 to 4. In particular, the pouch film 1 may comprise any or all of the features described above with reference to the pouch film 1000 in FIG. 1 to 4. The pouch film 1 may include a metal layer, preferably made of aluminum or an aluminum alloy. Before undergoing the press-forming as described herein, the pouch film 1may be substantially flat. In particular, the pouch film 1 may have a laminate structure including multiple layers laminated together. The pouch film 1 may preferably have a web-like shape. The pouch film 1 may, prior to being processed to an electrode case 11, have a constant and continuous film thickness d₁ between 100 µm and 250 µm, or between 150 µm and 200 µm, preferably between 175 µm and 190 µm, or more preferably of about 183 µm (e.g., 183 µm ± 10 µm). A film width in a crosswise film direction X (or width direction X) may span several to several tens of centimeters, for example 1 to 100 cm, or 2 to 50 cm, preferably 5 to 30 cm. The pouch film 1 may extend in the web transportation direction Y or longitudinal direction Y for significantly more than the film width, particularly for several meters or even more. For example, a film length in the longitudinal direction Y may be 5 to 500 cm, or 10 to 250 cm, or preferably 15 to 150 cm.

The battery case 11 is made of the pouch film 1 as disclosed herein. The battery case 11 includes a first cup portion 13 and a second cup portion 15, which may preferably be manufactured by deep drawing in an apparatus 100 as described herein. The cup portions 13 and 15 may be formed adjacent to each other and separated by a bridge portion 14 therebetween.

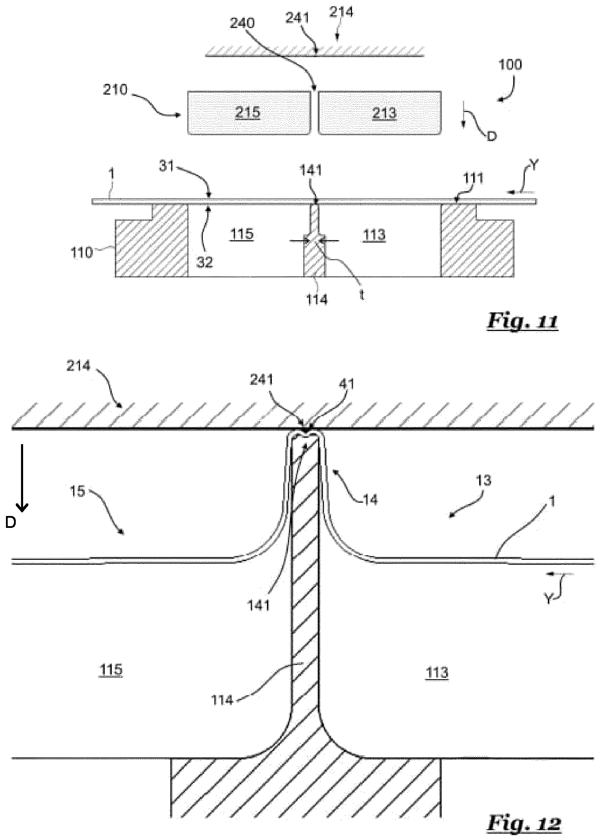

The pouch film 1 has a first surface 31 and a second surface 32 opposite to the first surface 31. For ease of reference, the first surface 31 may be referred to as the inside surface 31 and the second surface 32 may be referred to as the outside surface 32. With respect to the initially substantially flat shape of the pouch film 1, the cup portions 13, 15 (which may be formed by deep drawing and/or press-forming) are offset from the first surface 31 in the direction towards the second surface 32, or in other words: recessed (depressed) in a downward direction D, which may be parallel to a direction from the first surface 31 towards the second surface 32. The first surface 31 may be arranged above the second surface 32 in the apparatus 100 described below with respect to FIG. 11 and 12 and therefore be referred to as an upper film surface 31 and lower film surface 32.

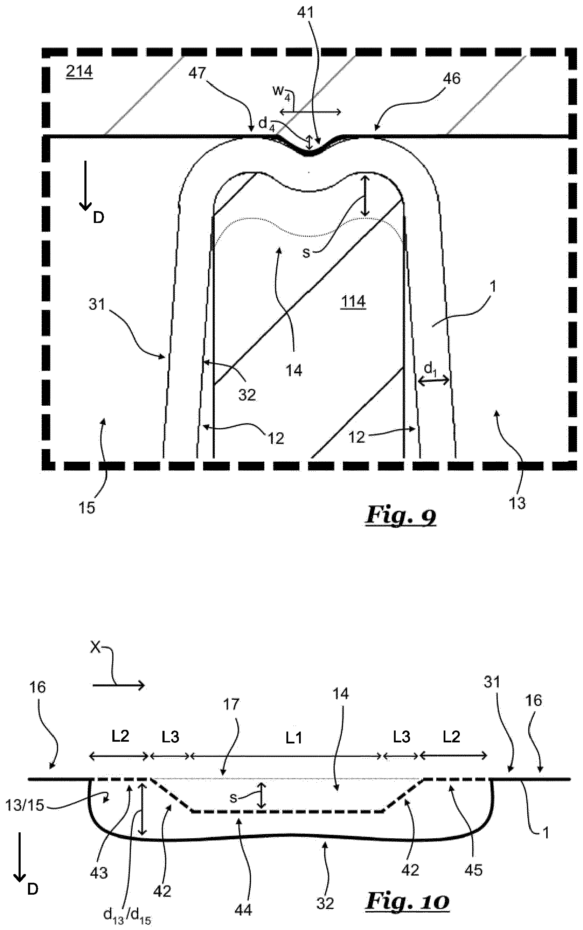

While the cup portions 13, 15 are depressed, the bridge portion 14 remains elevated. The bridge portion 14 may at least in part or completely remain in the plane of the pouch film 1 defined by the side portions 16 surrounding the cup portions 13, 15. In some embodiments, the peak of the bridge portion 14 is arranged entirely in the plane defined by the side portions 16 adjacent to the cup portions 13, 15 in the crosswise film direction X. In some embodiments, the peak of the bridge portion 14 may be divided into multiple sections, some of which may optionally be arranged on the same level as the side portions 16 and at least some of which are offset in the (downward) direction from the first surface 31 towards the second surface 32. The offset s of a section is less than the depth d₁₃, d₁₅ of the first cup portion 13 and/or of the second cup portion 15, as will be described hereinbelow with reference to FIG. 10.

In some embodiments, the peak of the bridge portion 14 is provided with a notch 41 formed in the bridge portion 14 for most of or substantially all of its length in the crosswise film direction X as will be described hereinbelow with reference for example to FIG. 9.

In order to form a pouch-type battery 10, the battery case 11 is folded onto itself about the bridge portion 14 between the cup portions 13 and 15 as illustrated in FIG. 6. In the illustrated embodiment, the bridge portion 14 is provided with a notch 41 impressed into the first surface 31 of the film pouch. The notch 41 may provide a film joint around which a well-defined folding motion of the pouch film may be performed.

The pouch film 1 may be divided into the first case section 18 (or: first pouch section 18) and the second case section 19 (or: second pouch section 19) as described above. The first and second case sections 18, 19 may be symmetrical to each other with respect to a plane that goes through the bridge portion 14. The bridge portion 14 may separate the pouch film 1 into two mirror symmetrical case sections 18, 19. Each of the case sections 18, 19 includes one respective cup portion 13, 15. Herein, the (battery) case sections 18, 19 may also be referred to as pouch sections 18, 19. The first cup portion 13 and the second cup portion 15 may be of the same or substantially the same shape and size. As the electrode assembly 21 has a substantially cubelike shape, the accommodation space for the electrode assembly 21 provided by the first and second cup portions 13, 15 has a shape corresponding to the cuboid electrode assembly. Thus, the respective width w₁₃, w₁₅ of the cup portions 13, 15 in the crosswise film direction X may preferably be of the same size. Also, the respective length l₁₃, l₁₅ of the first and second cup portions 13, 15 in the longitudinal film direction Y may be of the same size. The width w₁₃, w₁₅ of the cup portions 13, 15, respectively, extends in the crosswise film direction axis between mutually opposite side portions 16 of the case. 11. The respective length l₁₃, l₁₅ of the first or second cup portion 13, 15 extends in the lengthwise film direction Y between mutually opposite peripheral portions 12 of the respective cup portion 13, 15. The peripheral portions 12 may connect the depressed bottom of the cup portion 13, 15 with the bridge portion 14 and on the other hand with a sealing portion 17 of the respective case section 18, 19. The peripheral portions 12 may generally be referred to as sidewalls of the cup portion 13, 15. The sum of the first depth d₁₃ and the second depth d₁₅ of the first and second cup portions 13, 15 may correspond to a (stack) height h of the electrode assembly 21. As shown in the illustrated embodiments, the first depth d₁₃ and the second depth d₁₅ are equal or substantially equal. Alternatively, the first depth d₁₃ may be larger than the second depth d₁₅.

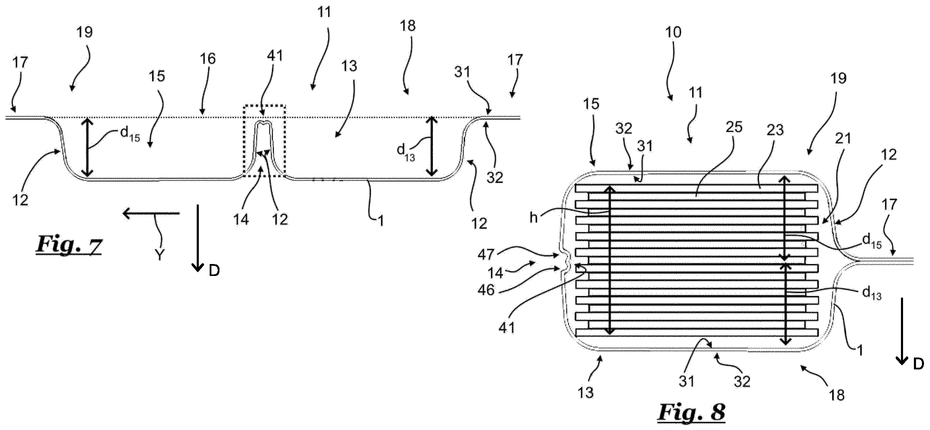

FIG. 7 illustrates a schematic sectional side view of the battery case 11. FIG. 8 shows a schematic sectional side view of a pouch-type secondary battery 10 comprising the battery case 11 shown in FIG. 7 in a folded state accommodating an electrode assembly 21.

In FIG. 7, the cross section through the pouch film 1 extending in a lengthwise film direction Y is shown. The pouch film 1 is shaped so as to include a first cup portion 13, a second cup portion 15 and the bridge portion 14 in between. In the lengthwise film direction Y, which may correspond to a traveling direction of the pouch film 1 through an apparatus 100, both of the cup portions 13, 15 have a respective adjacent degassing portion or sealing portion 17. Each of the cup portions 13 or 15 is therefore arranged in the lengthwise film direction Y between the bridge portion and its respective sealing portion 17. In the lengthwise film direction Y, the cup portions 13, 15 are both limited between opposite peripheral portions 12 (which may form sidewalls of the respective cup portion 13, 15). First peripheral portions 12 may form opposite legs of the bridge portion 14. Second peripheral portions 12 may connect the bottom of the cup portions 13, 15 with the sealing portion 17. The peripheral portions 12 may have an extension corresponding to the depth d_{13/}d₁₅ of the respective cup portion 13, 15 in the downward direction D. In the crosswise film direction X, which corresponds to the viewing direction onto the illustration in FIG. 7, the cup portions 13, 15 are limited by respective side portions 16. The side portions 16 and sealing portion 17 of the pouch film 1 may remain level during the shaping (e.g., press-forming and/or folding) of the pouch film 1, in particular using the apparatus 100 as described below, in particular when the cup portions 13 and 15 are depressed from the pouch film 1.

The tip or peak of the bridge portion 14 is provided with a notch 41 causing the bridge portion 14 to have an M-like shape in the cross-sectional view. Preferably, the pouch film 1 is continuously curved along its path from the first cup portion 13 to the second cup portion 15. Thus, the bridge portion 14 may be continuously curved. The bridge portion 14 includes the centrally arranged notch 41. In the area of the notch 41, the pouch film is preferably continuously curved with a downwardly (or: outwardly) protruding arc. On each side of the notch 41 in the longitudinal film direction Y, the respective summit 46, 47 may be formed which will be described in further detail hereinbelow with respect to FIG. 9. The summits 46 and 47 form preferably continuously curved arcs protruding upwardly (or: inwardly).

As shown in FIG. 8, thanks to the provision of the notch 41 and the inner surface 31 of the pouch film 1 and the center of the bridge portion 14, the second cup portion 15 can easily and precisely be folded onto the first cup portion 13 (or vice versa) so as to form a pouch for accommodating the electrode assembly 21. As the notch 41 in the bridge portion 14 defines a pivoting axis for the pouch film 1 to be folded onto itself, undesired deformation of the pouch film 1 particularly in the area of the side portions 16, and the bridge peak piercing into the electrode assembly 21 can be avoided.

FIG. 9 illustrates a detailed view of the pouch film 1 engaged between a partition wall 114 and stripper part 214 of the apparatus 100 for impressing the notch 41 into the pouch film 1. In the illustration shown in FIG. 9, multiple parts of the apparatus 100 are not shown, particularly the punch pads 213, 215.

The pouch film 1 has an essentially constant and continuous film thickness d₁. The notch 41 is pressed into the inner surface 31 of the pouch film 1 with the aid of the stripper part 214, wherein the partition wall 114 opposite to the stripper part 214 accommodates for deformation of the outer surface 32 of the pouch film 1. The notch 41 inserted into the pouch film 1 has a notch depth d₄. The notch depth d₄ is less than the film thickness d₁. The film thickness d₁ is 183 µm in the embodiment shown in FIG. 9. In the illustrated embodiment, the notch depth d₄ is approximately 40% of the film thickness d₁. The notch 41 extends in the longitudinal film direction Y between on the one hand a first summit 46 on the side of the first cup portion 13 and on the other hand second summit 47 on the side of the second cup portion 15. The notch width w₄ of the notch 41 in the longitudinal film direction Y between the summits 46 and 47 is larger than the notch depth d₄. The notch width w₄ may be as large as the film thickness dior smaller than the film thickness d₁. In particular, as shown in FIG. 9, the notch width w₄ may be approximately 75% of the film thickness d₁.

In some embodiments, as for example implied in FIG. 9, the partition wall 114 may be provided with different wall sections in the crosswise direction X which may have a different height so as to form the bridge portion 14 with correspondingly offset sections. This will be described in further detail below with respect to FIG. 10.

FIG. 10 shows a cross sectional view through a pouch film wherein the viewing direction corresponds to the longitudinal film direction Y. In the crosswise film direction X, the bridge portion 14 is divided into several sections 42, 43, 44, 45 of different height above the bottom of the adjacent cup portions 13, 15. The central bridge section 44 is offset from the plane defined by the side portions 16 and/or sealing portion 17 surrounding the cup portions 13, 15. The magnitude of height difference or short: offset s may be in the range of 0,05 to 5 mm, in particular in the range of 0,1 mm to 2,5 mm, preferably in the range of 0,2 mm to 2 mm. The central bridge section 44 has a first length L1. The central bridge section 44 may be arranged between a first lateral bridge section 43 on one side and a second lateral bridge section 45 on the other side. The lateral bridge sections 43, 45 may be flush (level) with the respective adjacent side portion 16. In the illustrated example, both lateral bridge sections 43, 45 have the same second length L2.

The change in height or offset s between the lateral bridge sections 43, 45 and the central bridge section 44 is overcome by a respective inclined section 42 on either side of the central bridge section 44. A first inclined section 42 connects the first lateral bridge section 43 with the central bridge section 44. A second inclined section 42 connects the second lateral bridge section 45 with the central bridge section 44. The inclined sections 42 have the same third length L3 in the illustrated embodiment. The first length L1 is larger than the third L3, preferably at least multiple times as large as the second length L2. The second length L2 is larger than the third length L3. The sum of the first length L1, the two second lengths L2 and the two third lengths L3 preferably corresponds to the cup width w₁₃ and/or w₁₅. The first length L1 may in particular be dimensioned to be at least as long as one half, preferably three quarters, of the cup width w₁₃ and/or w₁₅. The first length L1 may in particular be dimensioned to be at least as long as one quarter, preferably at least one half, of total width of the pouch film 1 in the crosswise direction X. The second length L2 may be approximately 10 mm. The first length L1 may be approximately 30 mm.

FIG. 11 shows a schematic illustration of the apparatus 100 according to the present disclosure. The apparatus 100 includes as its main constituents a die part 110 (hereinafter referred to as a die 110), a punch 210 and a stripper part 214. The apparatus 100 is configured so as to allow relative motion of the punch 210 with respect to the die 110 in the downward direction D so as to descend the punch 210 into the die 110. It may be preferred that the punch 210 is stationary and the die 110 is movable in an upward direction opposite to the downward direction D (and back). The apparatus 100 is further configured so as to allow relative motion of the stripper part 214 with respect to the punch 210, in particular for releasing a deep drawn pouch film 1 from the punch 210.

With reference to the above description of FIG. 1 to 4, an upper die may comprise or consist of a punch 210 and a lower die may comprise or consist of a die part 110.

The die 110 includes a first accommodating space 113 and the second accommodating space 115 and a partition wall 114 separating the accommodation spaces 113, 114 from each other. The punch 210 includes a first punch pad 213 and a second punch pad 215. The first punch pad 213 corresponds to an is associated with the first accommodating space 113. The second punch pad 215 corresponds to an is associated with the second accommodating space 115.

The initially flat pouch film 1 is positioned between the punch 210 and the die 110. The lower side to 32 of the pouch film 1 rests on the top surface 111 of the die 110. The upper side 31 of the pouch film 1 faces the punch 210 and the stripper part 214.

In order to shape the pouch film 1 for making a battery case 11 according to the present disclosure, the punch 210 is descended into the die 110. More specifically, the first punch pad 213 is descended into the first accommodating space 113 to impress a first cup portion 13 into the pouch film 1 and the second punch pad 215 is descended into the second accommodating space 215 to impress a second cup portion 15 into the pouch film 1. When the punch 210 is descended into the die 110, the bridge portion 14 is formed as an upward protrusion by the partition wall 114 which protrudes into the space 240 between the punch pads 213 and 214. The wall thickness t of the partition wall 114 corresponds to the width of the space 240.

As implied in the detailed view of the apparatus 100 shown in FIG. 12, the pouch film 1 is pinched between the stripper part 214 and the partition wall 114. The stripper part 214 is provided with a protrusion 241 configured for imprinting the notch 41 into the inner surface 31 of the pouch film 1. The partition wall is provided with a groove or crease 141 for accommodating the section of the pouch film 1 pressed downward when the notch 41 is introduced.

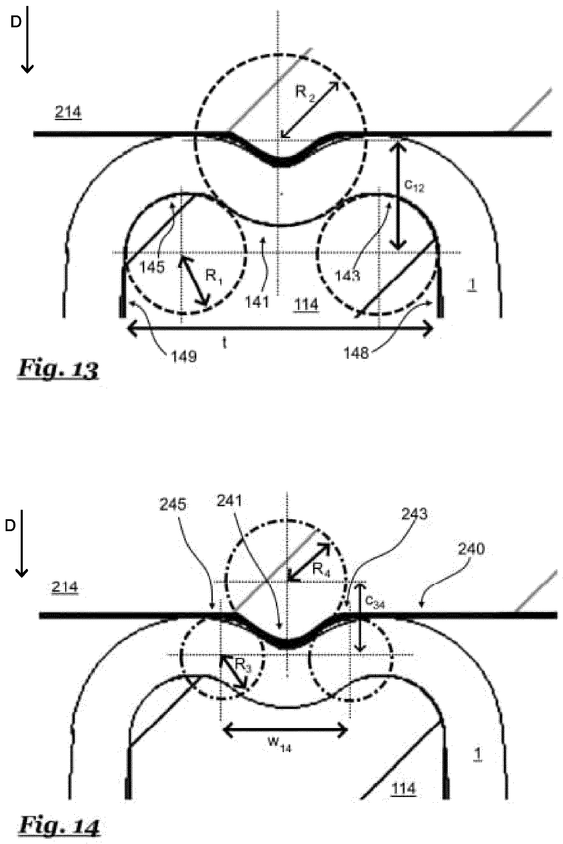

FIG. 13 and 14 show in detail the geometry of the stripper part 214 including the protrusion 241 on the one hand and on the other hand the partition wall 114 of the die 110 including the groove 141.

FIG. 13 illustrates the partition wall 114 in engagement with the pouch film 1. The partition wall 114 has a wall thickness t. The partition wall extends in the longitudinal direction Y from a first flank 148 to a second flank 149. The peak of the partition wall 114 is continuously curved with two upwardly protruding shoulders 143, 145 surrounding the central crease 141 which protrudes downwardly. The first shoulder 143 forms an edge of the peak towards the first flank 148 limiting first forming space 113. The second shoulder 145 forms an edge of the peak towards the second flank 149 limiting the second forming space 115. The shoulders 143, 145 are mirror symmetrical.

The shoulders define a first radius of curvature R₁. The first radius R₁ of curvature of the shoulders 143, 145 is preferably equal. The first radius of curvature R₁ of the shoulders 143, 145 may be no less than one tenth, in particular no less than one sixth, of the wall thickness t. Alternatively or additionally, the wall thickness t is at least three times as large as the first radius of curvature R₁, preferably at least four times as large as the first radius of curvature R₁. The first radius of curvature R₁ may be at least 0,1 mm, preferably at least 0,15 mm, and/or no more than 0,5 mm, preferably no more than 0,3 mm. In particular, the first radius of curvature R₁ may be approximately 0,2 mm. The first radius of curvature R₁ may be at least as large as or larger than the film thickness d₁.

The groove 141 forms an indentation in the peak of the partition wall 114. The groove 141 has an arcuate shape extending from the first shoulder 143 to the second shoulder 145. The groove may define a second radius of curvature R₂. The second radius of curvature R₂ of the groove may be no less than one tenth, in particular no less than one quarter, of the wall thickness t. Alternatively or additionally, the wall thickness t is at least twice as large as the second radius of curvature R₂, preferably at least three times as large as the second radius of curvature R₂. The second radius of curvature R₂ may be at least 0,2 mm, preferably at least 0,25 mm, and/or no more than 0,8 mm, preferably no more than 0,4 mm. In particular, the second radius of curvature R₂ may be approximately 0,3 mm. The second radius of curvature R₂ is larger than the film thickness d₁, however, it may be preferred that the second radius of curvature is no larger than twice the second radius of curvature R₂.

The second radius of curvature R₂ is preferably larger than the first radius of curvature R₁. A first center distance c₁₂ between the midpoint of the curvature of the shoulders 143 and/or 145 and midpoint of the curvature of the groove 141 in the downward direction D is at least 0,2 mm, in particular at least 0,3 mm, and/or no more than 0,6 mm, in particular no more than 0,5 mm. Preferably c₁₂ is approximately 0,5 mm.

FIG. 14 illustrates the stripper part 214 in engagement with the pouch film 1. The stripper part 214 has a generally flat plate surface 240. The stripper part 214 may therefore sometimes be referred to as a stripper plate 214. The plate surface 240 extends in the longitudinal direction Y and in the crosswise direction X. The plate surface 240 is provided with a ridge-like protrusion 241 configured to bend the pouch film 1 so as to form the notch 41. The protrusion 241 is continuously curved in the longitudinal direction Y. The protrusion has a central tip and a cosine-like shape flattening towards either side. The transition from the flat plate surface 240 to the protrusion 241 is preferably continuous. The transition sections 243, 245 on either side of the protrusion 241 are continuously curved until they are level with the plate surface 240. The transition sections 243, 245 are mirror symmetrical. The protrusion 241 has a protrusion width w₁₄ extending in the longitudinal direction Y from the beginning of first transition section 243 to the end of the second transition section 245. The respective transition section 241, 243 begins or ends at the level of the plate surface 240. The protrusion width w₁₄ may be at least 0,05 mm, preferably at least 0,1 mm, and/or no more than 2 mm, preferably no more than 1 mm.

The transition sections 243, 245 define a third radius of curvature R₃. The third radius of curvature R₃ of the transition sections 243, 245 is preferably equal. The third radius of curvature R₃ may be no less than one quarter, in particular no less than one half of the film thickness d₁. Alternatively or additionally, the third radius of curvature R₃ may be no more than ten times, in particular no more than six times the film thickness d₁. The third radius of curvature R₃ preferably corresponds to the protrusion width w₁₄. The third radius of curvature R₃ may be at least 0,05 mm, preferably at least 0,1 mm, and/or no more than 2 mm, preferably no more than 1 mm.

The protrusion 241 may define a fourth radius of curvature R₄. The fourth radius of curvature R₄ may be no less than one tenth, in particular no less than one quarter, of the film thickness d₁. Alternatively or additionally, the fourth radius of curvature R₄ may be no more than five times, in particular no more than 3 times the film thickness d₁. The fourth radius of curvature R₄ preferably corresponds to approximately half of the protrusion width w₁₄. The fourth radius of curvature R₄ may be at least 0,02 mm, preferably at least 0,05 mm, and/or no more than 0,75 mm, preferably no more than 0,5 mm.

The third radius of curvature R₃ is preferably larger than the fourth radius of curvature R₄. A second center distance c₃₄ between the midpoint of the curvature of the transition sections 243 and/or 245 and midpoint of the curvature of the protrusion 241 in the downward direction D is at least 0,05 mm, in particular at least 0,1 mm, and/or no more than 0,5 mm, in particular no more than 0,3 mm. Preferably, c₃₄ is approximately 0,2 mm.

Although preferred embodiments of the present disclosure have been described in detail above, the scope of the present disclosure is not limited thereto, and various modifications and improvements made by those skilled in the art using the basic concepts of the present disclosure, which are defined in the appended claims, also falls within the scope of the present disclosure.

### DESCRIPTION OF REFERENCE NUMERALS

- 1: pouch film
- 10: secondary battery
- 11: battery case
- 12: peripheral portion
- 13: first cup portion
- 14: bridge portion
- 15: second cup portion
- 16: side portion
- 17: sealing portion / degassing portion
- 18: first case section
- 19: second case section
- 21: electrode assembly
- 22: electrode tab
- 23: electrode, anode
- 24: separator
- 25: electrode, cathode
- 26: insulation part
- 27: electrode lead
- 31: first surface (inside surface/inner surface)
- 32: second surface (outside surface/outer surface)
- 41: notch
- 42: inclined bridge section
- 43: first lateral bridge section
- 44: central bridge section
- 45: second lateral bridge section
- 100: apparatus
- 110: die
- 111: top surface
- 114: partition wall
- 113, 115: forming spaces
- 141: crease, groove
- 143: first shoulder
- 145: second shoulder
- 210: punch
- 213, 215: punch pads
- 214: stripper part
- 240: plate surface
- 241: protrusion
- 243: first transition section
- 245: second transition section
- 300: apparatus
- 301: upper die
- 302: lower die
- 303: upper surface/ anvil
- 304: die part
- 305: base part
- 306: projection part/partition wall
- 307: tip portion/peak
- 308: gap
- 309: punch
- 310: stripper part
- 1000: (pouch) film
- 1001: secondary battery
- 1002: pouch
- 1003: peripheral portion
- 1004: sealing portion
- 1005: cup/cup portion
- 1006: bridge portion
- 1007: bat ear
- 1010: electrode assembly

- D: upward/downward direction
- D: upward/downward direction
- d₁: film thickness
- d₄: notch depth
- d₁₃: first cup depth
- d₁₅: second cup depth
- H: hollow space
- h: height
- L1: first length
- L2: second length
- L3: third length
- l₁₃: first cup length
- l₁₅: second cup length
- P: height difference
- R₁: first radius of curvature
- R₂: second radius of curvature
- R₃: third radius of curvature
- R₄: fourth radius of curvature
- s: offset
- t: wall thickness
- w₄: notch width
- w₁₃: first cup width
- w₁₄: protrusion width
- w₁₅: second cup width
- X: crosswise direction
- Y: lengthwise/longitudinal direction

## Claims

1. A pouch-type battery case (10) configured to accommodate an electrode assembly (21) having a structure in which electrodes (23, 25) and separators (24) are alternately arranged, the battery case (10) comprising:
a pouch film (1) having a film thickness (d₁), a first surface (31) and a second surface (34),
a first cup portion (13) formed in the pouch film (1) having a recessed shape offset from the first surface (31) towards the second surface (34);
a second cup portion (15) formed in the pouch film (1) having a recessed shape offset from the first surface (31) towards the second surface (34);
a bridge portion (14) formed in the pouch film (1) between the first cup portion (13) and the second cup portion (15) and connecting the first cup portion (13) to the second cup portion (15);
wherein the bridge portion (14) includes a notch (41) formed in the first surface (31) projecting towards the second surface (34).

2. The pouch-type battery case (10) according to claim 1, wherein the notch (41) has a notch depth (d₄) smaller than the film thickness (d₁), in particular less than half of the film thickness (d₁).

3. The pouch-type battery case (10) according to claim 1 or 2, wherein
the notch (41) has a notch width extending in the longitudinal film direction between two summits (46, 47) adjacent the notch (41), wherein the notch width is at least half, in particular at least one times, as large as the film thickness (d₁), and/or no more than three times, in particular no more than two times, as large as the film thickness (d₁).

4. The pouch-type battery case (10) according to one of the preceding claims, wherein the bridge portion (14) defines a bridge portion width extending from the first cup portion (13) to the second cup portion (15), wherein the notch (41) has a notch width (w₄) smaller than half of the bridge portion width.

5. The pouch-type battery case (10) according to one of the preceding claims, wherein the bridge portion (14) has a M-shaped cross section in the longitudinal film direction.

6. The pouch-type battery case (10) according to one of the preceding claims, wherein the pouch film (1) has a film thickness (d₁) of 100 µm to 250 µm, in particular 160 µm to 200 µm, preferably 180 µm to 190 µm.

7. A pouch-type battery case (10), in particular according one of the preceding claims, configured to accommodate an electrode assembly (21) having a structure in which electrodes (23, 25) and separators (24) are alternately arranged, the battery case (10) comprising:
a pouch film (1) having a film thickness (d₁), a first surface (31) and a second surface (34),
a first cup portion (13) formed in the pouch film (1) having a recessed shape offset from the first surface (31) towards the second surface (34);
a second cup portion (15) formed in the pouch film (1) having a recessed shape offset from the first surface (31) towards the second surface (34);
a bridge portion (14) formed in the pouch film (1) between the first cup portion (13) and the second cup portion (15) and connecting the first cup portion (13) to the second cup portion (15);
wherein the bridge portion (14) separating the first cup portion (13) from the second cup portion (15) in the longitudinal film direction and extending in a crosswise film direction includes a central bridge section (44) arranged between two lateral bridge sections (43, 45) in the crosswise film direction, wherein the central bridge section (44) is offset from the lateral bridge sections (43, 45) towards the second surface (34).

8. The pouch-type battery case (10) according to claim 7, wherein the lateral bridge sections (43, 45) are on the level of the inner surface (31) of the pouch film (1) surrounding the cup portion (13, 15), in particular on the level of a plane defined by the inner surface (31) surrounding the first and/or second cup portion (13, 15).

9. The pouch-type battery case (10) according to claim 7 or 8, wherein the central bridge section (44) has a first length and the lateral sections (43, 45) each have a second length, wherein the first length is larger than the second length, in particular at least twice as large as the second length.

10. The pouch-type battery case (10) according to one of the claims 7 to 9, wherein the bridge portion (14) further comprises inclined sections (42) connecting the central section (44) and the lateral section (43, 45).

11. A secondary battery including a battery case (10) according to one of the preceding claims folded onto itself such that the first cup portion (13) and the second cup portion (15) lie directly opposite one another forming a pouch, and an electrode assembly (21) accommodated in the pouch.

12. A battery case forming apparatus (100) for manufacturing the pouch-type battery case (10), in particular according to one of the claims 1 to 10, the battery case forming apparatus (100) comprising:
a die (110) which has a top surface (111), on which a pouch film (1) is to be placed, and which comprises two forming spaces (113, 115) recessed from the top surface (111) and a partition wall (114) separating the forming spaces (113, 115);
a punch (210) which is disposed above the forming spaces (113, 115), wherein the punch includes two punch pads (213, 215), and wherein the punch (210) is operable to descend the punch pads (213, 215) so as to insert the pouch film (1) placed on the top surface (111), into the forming spaces (113, 115), and
a stripper part (214) cooperating with the punch (210) and arranged between the punch pads (213, 215);
wherein the stripper part (214) comprises a protrusion (241) configured to shape a notch (41) into the pouch film (1),
wherein the partition wall (114) comprises crease (141) opposite the protrusion (241) for receiving a portion of the pouch film (1).

13. The battery case forming apparatus (100) according to claim 12, wherein the protrusion (241) has a protrusion height, wherein the protrusion height is smaller than a film thickness (d₁) of the pouch film (1) to be shaped, in particular smaller than half of the film thickness (d₁) and/or at least one tenth of the film thickness (d₁); and/or in that the crease (141) has a crease depth, wherein the crease depth is smaller than a film thickness (d₁) of the pouch film (1) to be shaped, in particular smaller than half of the film thickness (d₁) and/or at least one tenth of the film thickness (d₁), wherein in particular the crease depth corresponds to, preferably is equal to, the protrusion height.

14. The battery case forming apparatus (100) according to claim 12 or 13, wherein
the crease (141) defines a crease width extending between adjacent shoulders (143, 145) of the partition wall (114) and the partition wall (114) has a wall thickness (t) defined between the two forming spaces (113, 115),
wherein the wall thickness (t) is at least 1,1 times as large as the crease width, in particular at least 1,25 times as large as the crease width, and/or wherein the wall thickness (t) is no larger than 2 times the crease width, in particular no larger than 1,5 times the crease width.
wherein the wall thickness (t) is larger than the film thickness (d₁) of the pouch film (1) to be shaped, wherein in particular the wall thickness (t) is at least 2 times, preferably at least 4 times as large as the film thickness (d₁), and/or wherein the wall film thickness (d₁) is no larger than 10 times the wall thickness (t), in particular no larger than 6 times the film thickness (d₁).

15. The battery case forming apparatus (100) according to one of the claims 12 to 14, wherein
the protrusion (241) has a protrusion width between adjacent planar flanks of the stripper part (214), wherein the protrusion width is larger than the protrusion height,
wherein in particular the protrusion width is at least 1,25 times, preferably at least 1,5 times, as large as the protrusion height and/ or wherein the protrusion width is no more than 3 times, preferably no more than 2 times, as large as the protrusion height.

16. A battery case forming apparatus (100), in particular according to one of the claims 12 to 15, for manufacturing the pouch-type battery case (10), in particular according to one of the claims 1 to 10, the battery case forming apparatus (100) comprising:
a die (110) which has a top surface (111), on which a pouch film (1) is to be placed, and which comprises two forming spaces (113, 115) recessed from the top surface (111) and a partition wall (114) separating the forming spaces (113, 115);
a punch (210) which is disposed above the forming spaces (113, 115), wherein the punch includes two punch pads (213, 215), and wherein the punch (210) is operable to descend the punch pads (213, 215) so as to insert the pouch film (1) placed on the top surface (111), into the forming spaces (113, 115), and
a stripper part (214) cooperating with the punch (210) and arranged between the punch pads (213, 215);
wherein the partition wall (114) is arranged between the forming spaces (113, 115) in a crosswise direction, wherein the partition wall (114) comprises a central wall section arranged between two lateral wall sections in a crosswise direction, wherein the central wall section is offset with respect to the lateral wall sections in the direction in which the punch pads (213, 215) descend.

17. The battery case forming apparatus (100) according to claim 16, wherein the stripper part (214) and/or the punch (210) has a lug portion, wherein the lug portion is arranged between the punch pads (213, 215), and wherein the lug portion includes a central lug section arranged between to lateral lug sections in a crosswise direction, wherein the central lug section protrudes so as to be introduced into a retraction of the die (110) provided by the central wall section.
